# EUROPEAN PATENT SPECIFICATION

(11) **EP 1 598 911 B1**
(45) Date of publication and mention of the grant of the patent: **22.08.2007**
(21) Application number: 05104365.1
(22) Date of filing: 23.05.2005
(51) Int. Cl.: H02G 9/02, H02G 9/04

(54) **A method for applying a magnetic shielding along an AC power line.**
Verfahren zum Anordnen einer magnetischen Abschirmung längs einer Wechselstromenergieleitung
Procédé d'application d'un blindage magnétique le long d'une ligne de puissance à courant alternatif

(30) Priority: 21.05.2004 EP 04076497
(43) Date of publication of application: 23.11.2005
(73) Proprietor: Belgian Electricity Lines Engineering S.A., 1000 Bruxelles (BE)
(72) Inventor: Hoeffelman, Jean Belgian Electricity Lines Enginee, 1000 Bruxelles (BE); Gille, Alain Belgian Electricity Lines Engineerin, 1000 Bruxelles (BE); Beghin, Véronique Belgian Electricity Lines Engine, 1000 Bruxelles (BE)
(74) Representative: Quintelier, Claude

(56) References cited:
- EP-A- 1 148 605
- WO-A-20/04034539
- DE-A1- 19 847 123
- FR-A- 2 164 067
- BUCEA G ET AL: "SHIELDING TECHNIQUES TO REDUCE MAGNETIC FIELDS ASSOCIATED WITH UNDERGROUND POWER CABLES" CIGRE CONF. INTERNATIONALE DES GRANDS RESEAUX ELECTRIQUES, vol. 6, 1998, page COMPLETE, XP000949312

## Description

The present invention relates to a method for applying a magnetic shielding along an AC power line, in particular an underground power line, said power line comprising at least two electrical phase conductors defining a conductor plane, said magnetic shielding comprising shielding means applied along said power line, wherein respectively a first and a second plate-shaped electrically conductive shielding member, which are part of said shielding means, are installed along respectively a first and a second longitudinal side of said power line, said first and second longitudinal sides being opposite to each other and extend laterally along said electrical phase conductors, said first and second shielding members being installed in such a manner as to make each time an angle situated between 45° and 135°, in particular between 65° and 115°, with respect to said conductor plane and to form a continuous electrical conductor along said electrical phase conductors.

Such a magnetic shielding applied along a power line is known from EP 1 148 605A. This method is based on the principle of eddy currents that are induced in good conductive materials and that produce a field in opposition to the original field generated by the currents flowing in the power line (Lenz law). This principle is well known and used in the so-called "flat" or "plane" shielding as described in "Evaluation of different Analytical and Semi-Analytical Methods for the Design of ELF Magnetic Field Shields" A. Canova, A. Manzin, M. Tartaglia, published in IEEE Trans. on Industry Applications, vol 38, no 3 May/June 2002, or in "Integral Methods for Analysis and Design of Low-Frequency Conductive Shields" A. Canova, G. Grusso, M. Repetto, published in IEEE Trans on Magnetics, Vol. 39, NO 4, July 2003. A

The shielding proposed in EP 1 148 605A is used in order to mitigate the magnetic field produced by underground power lines generally installed in trenches. The known shielding means comprises two vertical metallic plates covered by a large horizontal metallic plate and forming so an inverted U-shaped shield. The electrical phase conductors are put in the ground in a flat configuration extending inside the shielding means. The thus obtained inverted U-shaped shield forms a housing trough which air can circulate in order to cool the conductors. The large horizontal plate is also needed for cooling purposes.

A drawback of this shielding configuration is that the power line is completely enclosed inside the volume delimited by the inverted U-shaped cover. This semi-closed configuration does not allow an easy detection of sheath faults in the power line without opening the configuration. Moreover such a configuration is not easy to install as it requires not only a trench width, which is substantially larger than the width required for installing the conductors, but also that the horizontal plate is correctly welded to the vertical ones along the whole length of the shielding in order to achieve a adequate shielding effectiveness. Such a shielding is thus rather expensive to install.

The PCT patent application WO 2004/034539 describes another method for applying a magnetic shielding along a power line. The phase conductors are installed in the ground in trefoil or flat configuration. The shielding means used in this method, contrary to the previous one, are made of ferromagnetic material. The base and the cover of the shielding means need therefore to form a closed contour. This enables to avoid discontinuities in the low reluctance magnetic circuit and, hence, to reduce outside the shielding the magnetic field created by the current flowing through the power line- Such a configuration is quite cumbersome to install, as it requires pre-designed well-shaped elements able to follow the irregularities of the power line route, including the junctions, and the necessity to close the base element by means of the cover, after installation of the power line and adequate backfilling. Moreover, like in the method described in EP 1 148 605A, the closed configuration does not allow an easy detection of faults in the power line without opening the configuration.

The object of the present invention is to provide a method for applying a magnetic shielding along an AC power line where it is easy to follow ground irregularities, where it is no longer necessary to dig a broader trench than required for installing the power line and which enables an easy sheath fault detection of the electrical phase conductors after application of the shielding.

For this purpose a method according to the invention is characterised in that said first and second shielding members are installed independently from each other and are thereafter bridged at least at their initial and at their end portion in order to form a closed electrical circuit between the first and second shielding member, said first and second shielding member being bridged in such a manner that said phase conductors remain accessible so as to enable a sheath fault detection without having to remove the shielding. Due to the fact that the first and second shielding members are installed independently from each other, there is no longer a need to dig a broader trench. Indeed the plates can simply be installed either by placing them at the longitudinal sides of the trench, having a width as needed for the electrical phase conductors, or by pushing them into the soil. Since the first and second shielding members are at least bridged at their initial and end portion, the electrical phase conductors remain accessible so as to enable an easy sheath fault detection without having to remove the shielding.

A first preferred embodiment of a method according to the invention is characterised in that at least one third plate-shaped shielding member is installed between said first and second shielding member, said third shielding member being installed in such a manner as to extend in a geometrical plane crossing said first and second shielding member and situated in between said first and second shielding member. The presence of at least a third shielding member improves the magnetic shielding.

A second preferred embodiment of a method according to the invention is characterised in that said first and second shielding member are installed in a substantially vertical direction. The vertical direction permits an easy installation of the shielding members.

A third preferred embodiment of a method according to the invention is characterised in that said third shielding member is installed in such a manner as to have no galvanic connection between the third shielding member and the first and second shielding member. In such a manner the independence remains between the different shielding members.

A fourth preferred embodiment of a method according to the invention is characterised in that said third shielding member is installed in a discontinuous manner along said electrical phase conductors. In such a manner the electrical phase conductors remain easily accessible.

Preferably said bridging is realised by means of a first and a second L-shaped plate, said first L-shaped plate being connected to said first shielding member and said second L-shaped plate being connected to said second shielding member, said L-shaped plates being further connected to each other. The use of L-shaped plates enables an easy realisation of the bridging.

The invention will now be described in more details with reference to the accompanying drawings, illustrating a preferred embodiment of a method according to the invention. In the drawings :
figure 1 shows an example of a trefoil configuration for laying electrical phase conductors of a power line in a trench;
figure 2 shows an example of a flat configuration for laying electrical phase conductors of a power line in a trench;
figure 3 illustrates an example of a magnetic shielding applied along a power line and obtained by application of the present invention;
figure 4 illustrates the induced currents in a U-shaped magnetic shielding;
figure 5 illustrates the field level of the created magnetic field with and without shielding for a flat configuration, as well as the shielding factor;
figure 6 illustrates the field level of the created magnetic field with and without shielding for a trefoil configuration, as well as the shielding factor;
figure 7 illustrates a comparison of mitigated and unmitigated magnetic fields for a single and a double low reactance link;
figure 8 illustrates measurements results on a double 150 kV link of 2000 mm² XLPE electrical phase conductors with the same phase arrangement in both circuits: RST-RST, with and without shielding and for two different heights above ground;
figure 9 illustrates the influence of the contact resistance between plates on the shielding effectiveness (calculated at ground level for 1 kA in the electrical phase conductors);
figure 10 illustrates the influence of the distance between horizontal plates and electrical phase conductor axis on the field measured at ground level (for 1 kA in the electrical phase conductor and 2 values of the contact resistance between vertical plates); and
figure 11 illustrates the influence of the electrical continuity between horizontal plates in function of the quality of contact between vertical plates.

In the drawings a same reference sign has been allocated to a same or analogous element.

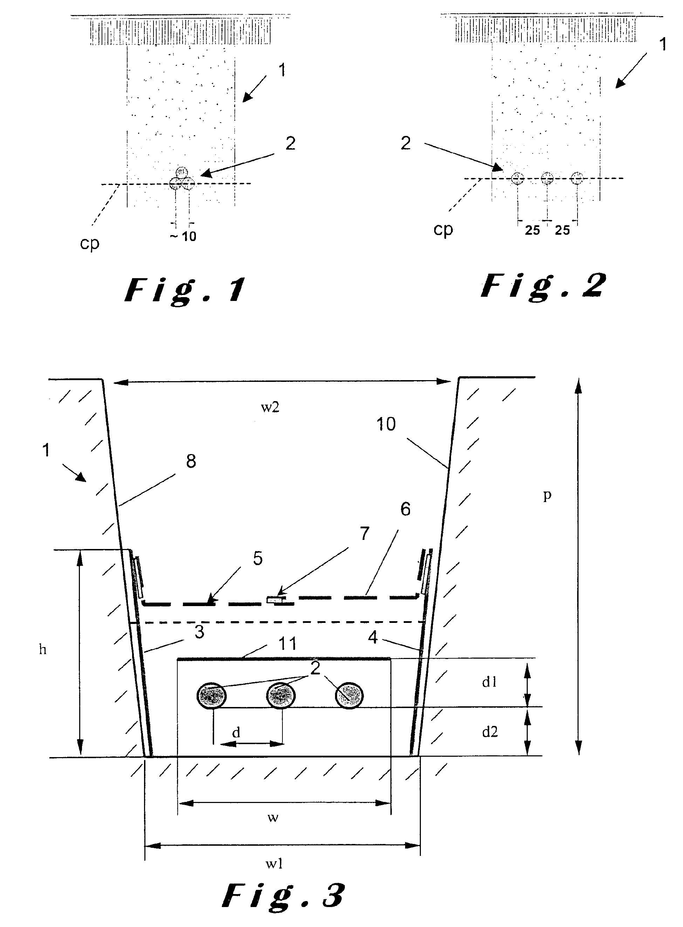

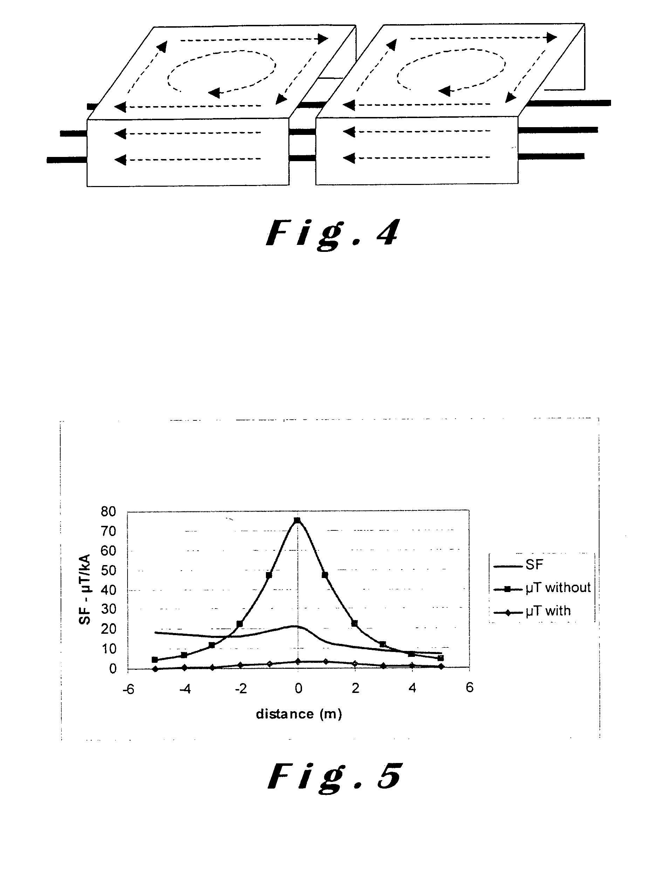

Figure 3 illustrates an example of a magnetic shielding obtained by application of the method according to the present invention. In a trench 1 three electrical phase conductors of an AC (Alternative Current) power line 2 are laid down. It should however be noted that the method is not only applicable to power lines placed in an underground trench, but also to power lines applied at or above ground level. Although three cables are illustrated, it will be clear that other embodiments are also possible, such as for example one cable having three phase conductors. The electrical phase conductors define a conductor plane (cp), which in the case of a flat configuration (figure 2) is the plane crossing the middle point of the electrical phase conductors and in the case of a trefoil configuration (figure 1) is the plane crossing the middle point of the two lowest electrical phase conductor.

The shielding means comprises a first 3 and a second 4 plate-shaped electrically conductive shielding member. The first and second shielding members are respectively installed along a first 8 and second 9 longitudinal side of the power line 2, i.e. in the present example, along the left and right longitudinal side. The first and second shielding members are installed independently from each other, for example by pushing them each separately into the ground or by placing them against the sidewalls of the trench. As is shown in figure 3, the first 8 and second 9 longitudinal sides are opposite to each other and extend laterally along the electrical phase conductors 2 over the whole length of the trench. For practical reasons, the first and second shielding members are made of plates of relatively short length, in particular 2 m length, which are electrically connected to each other, preferably by welding.

In the example shown in figure 3 the first and second shielding members are slightly inclined with respect to the conductor plane (cp). According to another embodiment of the invention, the first and second shielding member could also be installed in a substantially vertical direction with respect to the ground level. The first and second shielding member must however make each time an angle situated between 45° and 135°, in particular between 65° and 115°, with respect to the conductor plane (cp). It is also important that the first and second shielding members form each time a continuous electrical conductor along the power line in order to enable the creation of a continuous magnetic field.

The first and second shielding member, after having been installed, are bridged at least at their initial and their end portion in order to form a closed electrical circuit between the first and second shielding member and enable the creation of a magnetic field over the whole length over which the first and second shielding member extend. The bridging is for example realised by means of a first 5 and a second 6 L-shaped plate. The first L-shaped plate 5 is connected to the first shielding member 3 and the second L-shaped plate 6 is connected to the second shielding member 4, said L-shaped plates being further connected to each other at a junction 7 where the L-shaped plates overlap each other. The junction 7 and the connection to the first and second shielding member are, for example, realised by means of a welding or by nuts and bolts. Of course other ways of bridging the first and second shielding member than using L-shaped plates are possible, such as the use of flat plates or cables. It is however important that the bridging is realised by electrical conductive material in order to have an electrical current flowing inside the bridge. By bridging the first and second shielding member with each other, the electrical current, induced in the shielding means by the magnetic field created by the electrical current flowing through the electrical phase conductors, will create on its turn a magnetic field, which will attenuate the magnetic field created by the electrical current flowing through the electrical phase conductors, thereby creating a shielding effect.

As is further shown in figure 3, at least one third plate-shaped shielding member 11 made of electrically conductive material is installed between said first and second shielding member. The third shielding member being installed in such a manner as to extend in a geometrical plane crossing said first and second shielding member and situated in the intersection between said first and second shielding member. The geometrical plane extends within a volume delimited by said first and second shielding member. The third shielding member is installed in such a manner as to have no galvanic connection required between the third shielding member and the first and second shielding member. Preferably the third shielding member extends in a substantially horizontal direction when the first and second shielding members extend in vertical direction. The third shielding member is installed in a continuous or discontinuous manner along the electrical phase conductors, which signifies that, contrary to what is required for the said first and second shielding members, the successive plates do not need to be connected to each other. Although figure 3 shows only one third shielding member above the electrical phase conductors it could also be possible either to install another third shielding member under the electrical phase conductors, or to install the sole third shielding member under the electrical phase conductors.

According to the invention it is proposed to apply preferably a H-shaped layout for the different shielding members. Vertical and horizontal plates form thus a kind of H as shown in figure 3. For this reason, and although the horizontal plates may be optional or vertically moved up and down between the vertical plates, the layout will be conventionally called "H-layout". For the same width of the shielding, such a layout has a better shielding effectiveness than a horizontal layout and is much easier to install than a U-shaped layout. The basic idea of the method according to the invention is to make the three shielding members of the shielding means independent of each other, allowing so a much easier installation and lower costs as only flat plates need to be installed. This is made possible due to the shielding continuity in the longitudinal direction as described here before.

Contrary also to the inverse U-shape, the H-shape allows the use of classical methods for detecting sheath faults in the electrical phase conductors 2 and for repairing them. This is, indeed, generally considered as a serious problem with most shielding techniques.

Another advantage of the H-shape layout with respect to most other shielding techniques, and more particularly with respect to the use of ferromagnetic materials (see for example "Shielding technique to reduce magnetic fields from buried electrical phase conductors" P. Argaut, JY Daurelle, F. Protat, K. Savina, CA Wallaert, published in Jicable 1999 - paper A10.5.) is that the method can be applied also on electrical phase conductor junctions where the distance between phases can be quite appreciable and, hence, the emitted magnetic field too.

Finally, in comparison with the shielding techniques based on the use of passive loops the H layout exhibits also better results due to its inherent low inductance (see for example "Optimal design of active shielding for power lines" P. Cruz Romero, C. I. Mitchell, M. B. Payan, published in Power System Computer Conference, Sevilla 2002).

It should be noted that the invention is not limited to the use of a H-shaped layout. The presence of two shielding members extending in a direction inwards in the ground and applied along the electrical phase conductors would be sufficient, provided that the shielding members are bridged in at least two positions, in particular at the beginning and at the end of the electrical phase conductors.

The material used for building the shielding can be any metallic material with a very good continuity, typically copper or aluminium. However for cost reasons aluminium is usually a better choice. Although practically all the aluminium alloys can be used, the best alloy contains at least 99 % aluminium and no copper in order to avoid corrosion problems, like the 1050A class alloy (Al 99.5 %).

In the further description only reference to plain aluminium plates will be made but other metals as well as non-homogenous materials such as plates with holes or grids can be used as well. It should be further noted that the plate-shaped shielding members need not necessarily to be flat and that they could also be curved.

In the further description the first 3 and second 4 shielding members will be called "vertical plates" irrespectively of their true orientations. The same applies for the third shielding member 11, which will be called "horizontal plates". The whole set-up (electrical phase conductors and shielding) can, of course, be rotated by any angle. In this case the vertical plates will be called "main plates" and the horizontal plates "secondary plates".

The effectiveness of the shielding is higher with the flat configuration (producing the highest field) than with the trefoil configuration. Therefore, except where specified, reference will generally be made to the flat electrical phase conductors configuration.

Ideally the plates should be as long as the section of the power line that needs to be shielded. As this is not practically achievable, the plates have a finished length of a few meters (typically 2) arranged side by side in order to form the needed shielding length. In achieving this partition of the shielding the question of the electrical continuity between successive plates has to be addressed. As will be described hereinafter, the requirements are not the same for the vertical as for the horizontal plates.

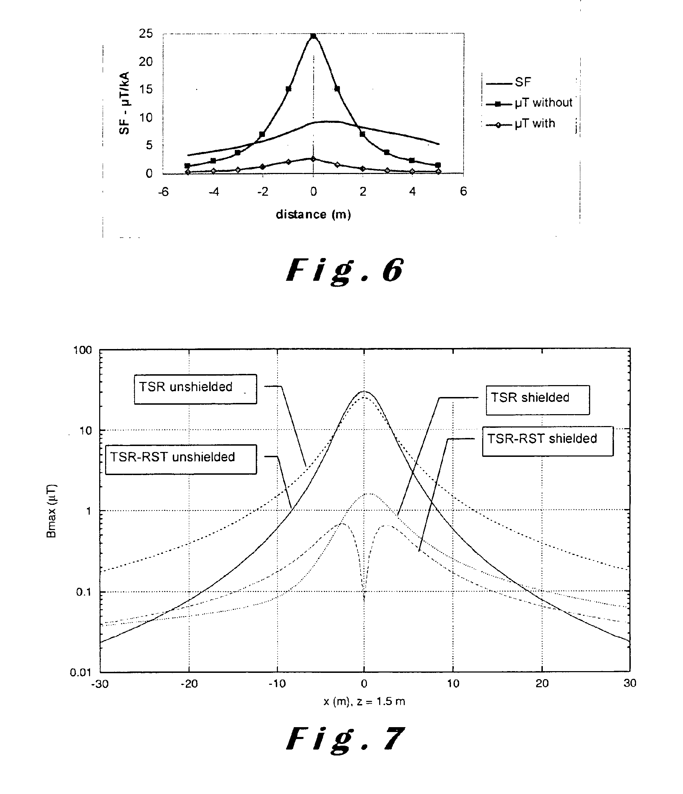

The horizontal plates don't need to have any particular contact with each other. A gap of a few cm can easily exist between successive plates, this would however not be the case for a shielding made only by horizontal plates. The reason for this absence of longitudinal continuity between horizontal plates is due to the fact that the induced eddy currents form a closed loop in each plate and counterbalance each other at the edge between successive plates. This phenomenon is schematically highlighted in figure 4 drawn for the case of the U-shape. The principle remains however valid for a pure horizontal layout ("flat" layout) and for a H-layout. It can be shown however that only for the H layout the absence of continuity between successive horizontal plates had no influence on the shielding effectiveness. This is not the case with the flat or the U-shape layouts. It has also been demonstrated that, in the H-layout, there was no need of contact between horizontal and vertical plates.

Contrary to what happens for the horizontal plates, a good electrical continuity needs to be achieved between vertical plates in order to allow the induced currents to flow from one plate to the following (cf. figure 4). Therefore the vertical plates need preferably to be laid down with some overlap and a good galvanic contact has to be secured by means of bolts, rivets or, preferably by welding. As already mentioned it is mandatory to close, at both ends of the shielded area, the loop formed by the vertical plates at both longitudinal sides of the electrical phase conductors.

Beside the use of L-shaped plates or a horizontal plate, an alternative to the bridge layout is to install a folded plate (U-shape) on the bottom of the trench prior to install the electrical phase conductors and to apply backfilling. The efficiency will even be better than with the bridge, but could pose some practical problems for fastening or welding the U-shaped plate to the first and second shielding member. It should be noted that the continuity link (bridge, U) between the first and second shielding members preferably has approximately the same shape as the vertical plates. Indeed, a link made by a cable of the same cross section as the plates will produce less good results, because it has a higher inductance than a thin plate and, hence, will limit the level of induced current. This is also the reason why the H-layout exhibits much better results than a layout based on the use of passive loops. Although the closing of the loop formed by the vertical plates is only required at the ends of the shielded area, it is preferred to install more bridges on long sections. These extra bridges will not improve the global effectiveness but, in case of break in the shielding continuity, only part of the shielded area will be affected. A good rule of common practice is to install a bridge at least every 200 m and at the beginning and the end of each modification of the profile (crossing of a road, junction box...).

Table 1 gives some typical dimensions for a shielding made with plain aluminium plates. The dimensions given in this table are given for information and for the sensitivity analysis. In no way the minimum and maximum values should be considered as absolute limits.

**Table 1**

| References to figure 3 | Minimum | Maximum | Reference |
|---|---|---|---|
| Trench width "w1" (horizontal configuration) | / | / | 90 cm |
| Trench width "w1" (trefoil configuration) | / | / | 70 cm |
| Trench depth "p" | / | / | 150 cm |
| Electrical phase conductor diameter (outer sheet) "D" | / | / | 11 cm |
| Inter-distance "d" between conductor axis (horiz. configuration) | D | 50 cm | 25 cm |
| Distance "d2" conductor - bottom of trench | 0 | 80 cm | 20 cm |
| Thickness of plates | 2 mm | 6 mm | 3 mm |
| Height "h" of vertical plates | 30 cm | 150 cm | 100 cm |
| Width "w" of horizontal plates | 0 | w2 | 80 cm |
| Distance "d1" horizontal plates to conductor base | D | h - d2 | 20 cm |
| Distance between successive bridges | / | shielded section | 200 m |
| Length of welding cordon between vertical plates | 4 cm | h | 50 cm |

The shielding effectiveness depends on several factors like the measurement position, the electrical phase conductor configuration, the material used (copper or aluminium) the thickness and dimensions of the plates, the distances between vertical plates, the distance between electrical phase conductors an horizontal plates, the shielding continuity etc. Some parameters have of course a higher influence than other as indicated hereunder. With the typical layout of figure 3, the dimensions of table 2 and perfect contacts between vertical plates, the calculated field and shielding factor (SF) at ground level are presented in figure 5 for a horizontal configuration of the electrical phase conductors and on figure 6 for a trefoil configuration. In those figures 5 and 6 the distance is measured along a horizontal axis having its origin at the middle point of the central electrical phase conductor. The generated magnetic field is expressed in µTesla/kA. The shielding factor SF is the ratio between the created magnetic fields with and without magnetic shielding. As can be seen on these figures, the SF lies between 10 and 20 for the horizontal configuration and between 5 and 10 for the trefoil configuration, depending of the side of the link where the assessment is performed and of the phase order in the electrical phase conductors. For the case shown on the figures this order is TSR from left to right in the horizontal configuration and counter clockwise for the trefoil configuration, where TSR represent a coding indicating the phase order in the three different electrical phase conductors of a tri-phase current. The asymmetry of the curves is normal and due to the vertical asymmetry of the shielding with respect to the electrical phase conductor configuration. A reversed phase order in the electrical phase conductors would invert both sides (left and right) of the curves. Higher SF can be achieved with different dimensions or with the use of copper instead of aluminium. The asymmetry of the shielding factor has consequences for the applied phase order. So, for example, if the electrical phase conductors are located close to houses, care will be taken that a phase order is applied which causes the highest attenuation of the magnetic field along the side where the houses are situated.

Table 2 illustrates the dimensions of the shielding for the calculations presented in figure 5 and figure 6.

**Table 2**

| | Horizontal configuration | Trefoil configuration |
|---|---|---|
| Trench width "w1" | 101 cm | 66 cm |
| Trench depth "p" | 158 cm | 158 cm |
| Electrical phase conductor diameter (outer sheet) "D" | 11.2 cm | 11.2 cm |
| Inter-distance "d" between conductor axis | 25 cm | 11.2 cm |
| Distance "d2" conductor - bottom of trench | 27 cm | 27 cm |
| Thickness of plates | 3 mm | 3 mm |
| Height "h" of vertical plates | 100 cm | 100 cm |
| Width "w" of horizontal plates | 100 cm | 65 cm |
| Distance "d1" horizontal plates to conductor base | 38 cm | 38 cm |

The asymmetry of the mitigated fields has as results that, when multiple electrical phase conductor circuits are installed in parallel (typically two), the resulting shielding effectiveness will depend on the way the phase order are arranged in the different circuits. As for overhead lines, when the phase order is changed between both circuits of a double link (low reactance scheme), the resulting unmitigated field, far from the link, decreases with the square of the distance to the axis of the circuits (1/r²) instead of with the distance (1/r) and is independent from the chosen rotation direction (RST-TSR or TSR-RST).

For the mitigated field after shielding, the decrease will normally be only in 1/r but the achieved shielding factor will depend on the rotation direction: The layout TSR-RST for the horizontal configuration or the layout "clockwise - counter clockwise" for the trefoil configuration will exhibit better results than their homologous RST-TSR and "counter clockwise - clockwise" schemes. With the TSR-RST layout the maximum SF above the electrical phase conductors is higher than for a single circuit and can be close to 40. This is highlighted on figure 7 where field calculations have been performed on a single and a double horizontal electrical phase conductors configuration similar to that of table 2 but with a calculation distance of 1.5 m above ground and for a current of 1300 A in each circuit. The distance between the axes of both circuits is 2 m. The results are given in terms of peak induction field (Bmax), which is equivalent to the resultant field (or the RMS field) multiplied by 1.41 (√2).

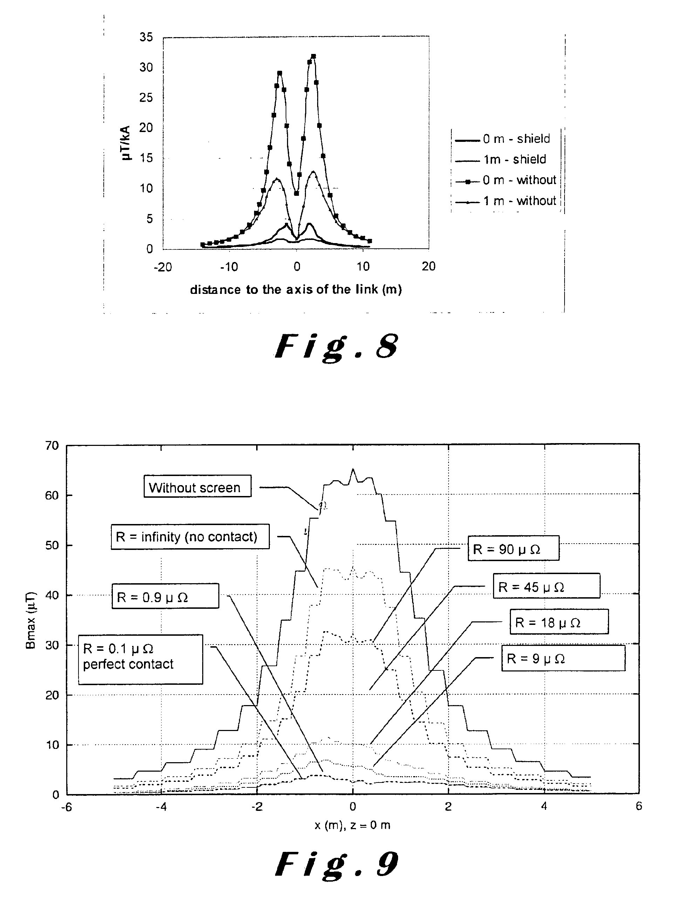

The only problem that can arise with a low reactance arrangement is that the unmitigated magnetic field is somewhat higher between both circuits than that produced by a single circuit (cf. figure 7). For that reason it can sometimes be necessary to achieve a classical "super bundle" RST-RST scheme for the double link and to apply the shielding without modifying the phase arrangement. As an example, figure 8 shows measurement results performed on an actual double 150 kV link on two different places, respectively with and without shielding (the distance between electrical phase conductor axis is not exactly the same for the two profiles). The layout chosen for this experience is the reference layout of Table 1. The phases order in the two links is the same (RST-RST). Measurements are made at ground level (0 m) and at 1 m above ground. The measured shielding factor achieved in this actual case is, at least, equal to 10.

Concerning the influence of the different parameters involved in the shielding efficiency, the results given below are based on calculations performed, starting from the typical layout of figure 3. A thickness of 3 mm can be considered as a technico-economic optimum, taking into account that the increase of the SF above this thickness is not significant (less than proportional). Above 5 mm there is practically no more SF increase noticeable. On the other hand the SF decreases seriously below 2 mm.

The contact resistance between successive vertical plates needs to be kept under control in order not to limit the induced currents. Figure 9 shows, for 3 mm plates of 80 x 200 cm (high x length), the influence of the contact resistance on the shielding effectiveness when the value of this resistance varies from that of a perfect contact (R = 0.1 µΩ) to that of no contact (R = infinity). It can be shown from these results that, up to a contact resistance of about 1 µΩ there is practically no influence on the shielding effectiveness (SE), whereas up to about 20 µΩ, the SE, although reduced, is not too much affected. This is typically the result that can be achieved by bolting techniques if adequate protection grease is applied to prevent degradation with time.

With welding techniques (e.g. aluminium welding under argon), the contact resistance easily remains bellow R = 1 µΩ and has no influence on the shielding effectiveness. Practically, in order to achieve a result that approaches that of a continue shielding, the welding cordon needs to be performed on about 2/3 of the plates height, i.e., for a height of 80 cm, about 50 cm. With a vertical welding cordon of only 4 cm the shielding effectiveness can be reduced by a factor 2 to 3 with respect to the optimum. The best results are achieved when the welding cordon starts from the bottom of the plates but, for practical reasons, it is easier to achieve it starting from the top.

It is also worth mentioning that the absence of contact between only two successive plates (open loop) is equivalent to the absence of contact between all the plates and leads to a very important loss of effectiveness. The resultant shielding factor (SF of about 1.5) is then even worse than with the horizontal plates alone (at least above the link).

The shielding factor increases with the width of the horizontal plates. Increasing this width from 80 cm to 100 cm brings an increase of the SF of about 30 %. However, the existence of a gap between vertical and horizontal plates also brings an increase of the SF. As an example, keeping the distance between the vertical plates to 100 cm and increasing the width of the horizontal plates to the same value doesn't bring practically any improvement to the SF. On the other hand, if the horizontal plates are completely removed, the SF is practically reduced by a factor 2 (at least in the direct vicinity of the electrical phase conductors; this reduction is somewhat smaller at distances higher than 2 m from the electrical phase conductors). Taking into account the smaller influence of the horizontal plates on the SF and the higher losses they involve, the horizontal plates can be considered as optional.

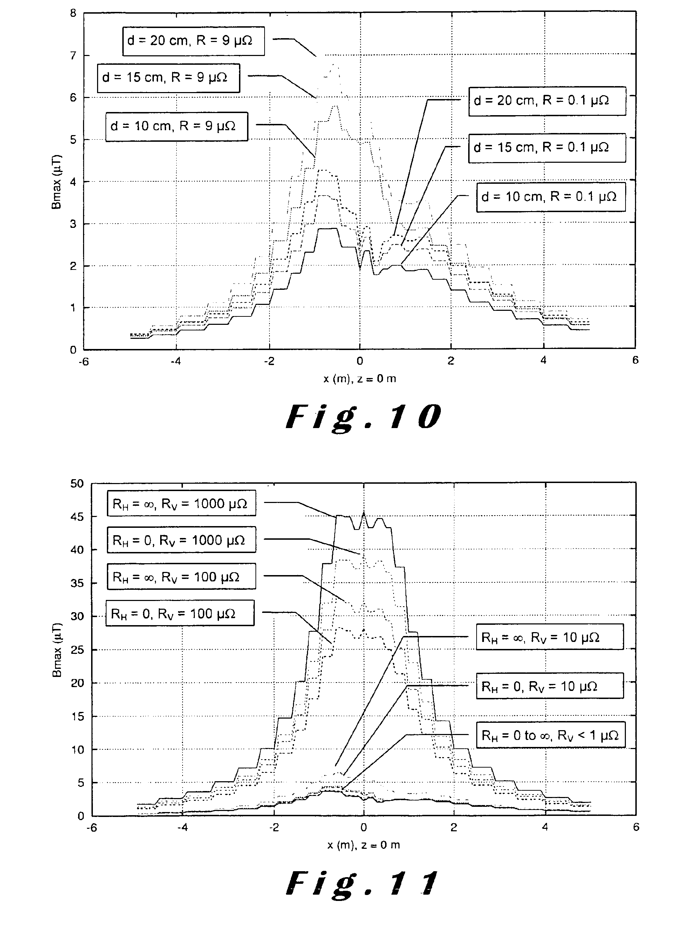

The closer the horizontal plates are with respect to the electrical phase conductors, the best the shielding effectiveness will be. This is shown on figure 10 for different values of the distance "d" between plates and electrical phase conductor axis. (d = d1 - D/2) and for two different values of the contact resistance between plates. Care must be taken, however, not to bring the plates too close to the electrical phase conductors, as it could result in high losses and even in overheating of the plates. With a distance to the electrical phase conductor axis of 15 cm, which corresponds to a typical distance "d1" of 20 cm in figure 3, the losses, for 1 kA in the electrical phase conductor, are about 23 W/m in the horizontal plates and only about 5 W/m in the vertical plates. Although such losses contribute significantly to the total Joule losses of the link, they remain quite acceptable in term of heating and don't affect the normal cooling of the electrical phase conductors. It is also worth mentioning that the current induced in the vertical plates is equal to about 1/3 of the current in the electrical phase conductors (for the reference layout).

It has already been mentioned that the contact between successive horizontal plates was not relevant. This is true on the condition that the vertical plates are effective and form a close loop with the bridges. In case of bad contact between successive vertical plates, the effectiveness of the horizontal plates increases if they are in good contact with each other. This is highlighted in figure 11, where, for different value of the contact resistance between vertical plates (R_{V}), the resulting field is calculated in the presence (R_{H} = 0) or the absence (R_{H} = ∞) of continuity between successive horizontal plates. In normal circumstances a good contact between vertical plates is mandatory and there is no need for contact between horizontal plates. What is more, a gap of up to 10 cm can easily be held between successive plates without affecting the SF (except in the direct vicinity of the gap). This feature, together with the gap between vertical and horizontal plates, has several advantages:
1) Easy installation (large tolerances)
2) Easy fault detection
3) Less risk of stray currents

By putting the horizontal axis of the vertical plates at the same level as that of the axis of the electrical phase conductors it is possible to enhance the shielding factor up to a factor 2 with respect to that of the reference. This is, however, not easily achievable as it implies a deeper trench depth or installing the electrical phase conductors higher in the trench.

One of the problems with the shielding of the AC power line is that the presence of the shielding may compromise the search of a fault in the electrical phase conductor sheath. This is the case in particular when the electrical phase conductors are embedded in a continuous tubular shielding (cf. shielding by ferromagnetic materials). With the layout obtained by application of method according to the present invention, and more particularly with the allowed gap between successive horizontal plates, it becomes easier to apply fault detection by pin point techniques or similar. This can be achieved, e.g., by using the shielding as a return path for the injected signal and by adding a connection between the shielded section and the measurement place (earth box). It is also quite easy to remove the horizontal plates for repairing the electrical phase conductors.

As regards the risk of corrosion, taking into account the lack of experience and publications related to the burial of large aluminium pieces in the ground only the risks for aluminium are described, knowing that copper is widely used for making earth electrodes and that the corrosion of buried copper is well described in the literature. Aluminium has a great affinity for oxygen but is also very quickly covered by a protective layer of oxide.

The main corrosion mechanism for aluminium occurs by puncture mainly in the presence of chloride (salt...). These punctures can be locally severe (depending of the type of soil) but they tend to stabilise after 4 to 5 years. Their maximum depth seems to be about 1.8 mm after 7 years. Generalised corrosion (important loss of weight) normally doesn't occur with aluminium alloys of high purity (> 99 %) that doesn't contain copper. Aluminium alloys with high purity (1050A class) are normally well resistant to corrosion if the pH of soil remains relatively neutral (3< pH < 9). With the use of a controlled backfilling like dolomite (double carbonate of calcium and aluminium), the pH is slightly basic under high humidity conditions and could affect the stability of the protective layer. Practically, however, a natural coating of Ca(AlO₂)₂ appears, which is insoluble in water. Taking this fact into account it can be assumed that generalised corrosion of aluminium plates will be less than 100 µm after 10 year.

Although buried aluminium will be partially protected by its hydroxide coating it remains an electronegative metal that can be corroded in contact with more electropositive metals like steel and copper. Therefore it remains very important to avoid any contact with those materials. The influence of DC currents on buried aluminium is not well known. There could be some risk in the vicinity of DC traction systems. This risk remains however very small if the aluminium plates are in direct contact with the soil forming a kind of earth electrode. In that case, indeed, the current densities will always remain very small.

AC stray currents could involve, by local alcalinisation, dissolution of the natural protective coating. The current density threshold for starting an AC corrosion is about 70 µA / cm². Measurements performed on a short length of H shape shielding for a power line, with no continuity between the plates, have shown current densities smaller than 1 µA/cm². Computer simulations for a electrical phase conductor link with 1300 A in the conductors, in the absence of horizontal plates but with electrical continuity between vertical plates, have shown even much lower current losses. These results are reassuring but are based on the hypothesis that the leakage currents are equally distributed on the surface of the plates. This statement, of course, is not sure. This is one of the reasons why it is advisable to hold a gap between vertical and horizontal plates and also why it is not advisable to protect the plates by a special coating that could result in leakage currents concentrating on very small surfaces or on the edges of the plates. For the reasons presented in the previous sections it is not advisable to protect the plates with any coating, nor to apply any cathodic protection. It is also not advisable to use aluminium plates with a thickness smaller than 3 mm.

## Claims

1. A method for applying a magnetic shielding along an AC power line (2), in particular an underground power line, said power line comprising at least two electrical phase conductors defining a conductor plane, said magnetic shielding comprising shielding means applied along said power line, wherein respectively a first (3) and a second (4) plate-shaped electrically conductive shielding member, which are part of said shielding means, are installed along respectively a first and a second longitudinal side of said power line, said first and second longitudinal sides being opposite to each other and extend laterally along said electrical phase conductors, said first and second shielding members being installed in such a manner as to make each time an angle situated between 45° and 135°, in particular between 65° and 115°, with respect to said conductor plane (cp) and to form a continuous electrical conductor along said electrical phase conductors, **characterised in that** said first and second shielding members are installed independently from each other and are thereafter bridged (5,6,7) at least at their initial and at their end portion in order to form a closed electrical circuit between the first and second shielding member, said first and second shielding member being bridged in such a manner that said phase conductors remain accessible so as to enable a sheath fault detection without having to remove the shielding.

2. A method as claimed in claim 1, **characterised in that** at least one third plate-shaped shielding member (11) is installed between said first and second shielding member, said third shielding member being installed in such a manner as to extend in a geometrical plane crossing said first and second shielding member and situated in between said first and second shielding member.

3. A method as claimed in claim 2, **characterised in that** said geometrical plane extends within a volume delimited by said first and second shielding member.

4. A method as claimed in claim 2 or 3, **characterised in that** said at least one third shielding member is installed in such a manner as to not require a galvanic connection between said at least one third shielding member and the first and second shielding member.

5. A method as claimed in anyone of the claims 1 to 4, **characterised in that** said first and second shielding member are installed in a substantially vertical direction.

6. A method as claimed in claim 5 in combination with anyone of the claims 2 to 4, **characterised in that** said at least one third shielding member is installed in such a manner as to extend in a substantially horizontal direction.

7. A method as claimed in anyone of the claims 2 to 6. **characterised in that** said at least one third shielding member is installed in a discontinuous manner along said electrical phase conductors.

8. A method as claimed in anyone of the claims 1 to 7, **characterised in that** said bridging is realised by means of a first and a second L-shaped plate, said first L-shaped plate being connected to said first shielding member and said second L-shaped plate being connected to said second shielding member, said L-shaped plates being further connected to each other.

9. A method as claimed in anyone of the claims 1 to 8, **characterised in that** said first, second and third shielding member are placed in such a manner as to form a H-shape.

10. A method as claimed in anyone of the claims 1 to 9, **characterised in that** said shielding members are made of aluminium or copper.

## Patentansprüche

1. Verfahren zum Anwenden einer magnetischen Abschirmung entlang einer Wechselstromleitung (2), insbesondere einer unterirdisch verlegten Stromleitung, wobei die Stromleitung wenigstens zwei elektrische Phasenleiter umfasst, die eine Leiterebene definieren, wobei die magnetische Abschirmung ein Abschirmmittel umfasst, das entlang der Stromleitung angewendet wird, wobei ein erstes (3) bzw. ein zweites (4) plattenförmiges, elektrisch leitfähiges Abschirmelement, die ein Teil des Abschirmmittels sind, entlang einer ersten bzw. einer zweiten Längsseite der Stromleitung installiert werden, wobei die erste und die zweite Längsseite einander gegenüberliegen und sich seitlich entlang der elektrischen Phasenleiter erstrecken, wobei das erste und das zweite Abschirmelement so installiert werden, dass sie jedes Mal einen Winkel, der zwischen 45° und 135°, insbesondere zwischen 65° und 115°, beträgt, relativ zu der Leiterebene (cp) bilden und einen durchgängigen elektrischen Leiter entlang der elektrischen Phasenleiter bilden, **dadurch gekennzeichnet, dass** das erste und das zweite Abschirmelement unabhängig voneinander installiert werden und danach wenigstens an ihrem Anfangs- und an ihrem Endabschnitt überbrückt (5, 6, 7) werden, um einen geschlossenen elektrischen Stromkreis zwischen dem ersten und dem zweiten Abschirmelement zu bilden, wobei das erste und das zweite Abschirmelement so überbrückt werden, dass die Phasenleiter dergestalt zugänglich bleiben, dass eine Manteldefektdetektion möglich ist, ohne die Abschirmung entfernen zu müssen.

2. Verfahren nach Anspruch 1, **dadurch gekennzeichnet, dass** wenigstens ein drittes plattenförmiges Abschirmelement (11) zwischen dem ersten und dem zweiten Abschirmelement installiert wird, wobei das dritte Abschirmelement so installiert wird, dass es sich in einer geometrischen Ebene erstreckt, die das erste und das zweite Abschirmelement kreuzt, und zwischen dem ersten und dem zweiten Abschirmelement angeordnet ist.

3. Verfahren nach Anspruch 2, **dadurch gekennzeichnet, dass** sich die geometrische Ebene innerhalb eines Volumens erstreckt, das durch das erste und das zweite Abschirmelement begrenzt wird.

4. Verfahren nach Anspruch 2 oder 3, **dadurch gekennzeichnet, dass** das wenigstens ein drittes Abschirmelement so installiert wird, dass keine galvanische Verbindung zwischen dem wenigstens einen dritten Abschirmelement und dem ersten und dem zweiten Abschirmelement benötigt wird.

5. Verfahren nach einem der Ansprüche 1 bis 4, **dadurch gekennzeichnet, dass** das erste und das zweite Abschirmelement in einer im Wesentlichen vertikalen Richtung installiert werden.

6. Verfahren nach Anspruch 5 in Kombination mit einem der Ansprüche 2 bis 4, **dadurch gekennzeichnet, dass** das wenigstens ein drittes Abschirmelement so installiert wird, dass es sich in einer im Wesentlichen horizontalen Richtung erstreckt.

7. Verfahren nach einem der Ansprüche 2 bis 6, **dadurch gekennzeichnet, dass** das wenigstens ein drittes Abschirmelement in einer nicht-durchgängigen Weise entlang den elektrischen Phasenleitern installiert wird.

8. Verfahren nach einem der Ansprüche 1 bis 7, **dadurch gekennzeichnet, dass** das Überbrücken mittels einer ersten und einer zweiten L-förmigen Platte realisiert wird, wobei die erste L-förmige Platte mit dem ersten Abschirmelement verbunden ist und die zweite L-förmige Platte mit dem zweiten Abschirmelement verbunden ist, wobei die L-förmigen Platten des Weiteren miteinander verbunden sind.

9. Verfahren nach einem der Ansprüche 1 bis 8, **dadurch gekennzeichnet, dass** das erste, das zweite und das dritte Abschirmelement so angeordnet sind, dass eine H-Form gebildet wird.

10. Verfahren nach einem der Ansprüche 1 bis 9, **dadurch gekennzeichnet, dass** die Abschirmelemente aus Aluminium oder Kupfer hergestellt sind.

## Revendications

1. Procédé pour appliquer un blindage magnétique le long d'une ligne de puissance à courant alternatif (2), en particulier une ligne de puissance souterraine, ladite ligne de puissance comprenant au moins deux conducteurs de phase électrique définissant un plan des conducteurs, ledit blindage magnétique comprenant des moyens de blindage appliqués le long de ladite ligne de puissance, dans lequel respectivement un premier (3) et un deuxième (4) membre de blindage électriquement conducteur en forme de plaque, qui font partie desdits moyens de blindage, sont installés le long respectivement d'un premier et d'un deuxième côté longitudinal de ladite ligne de puissance, lesdits premier et deuxième côtés longitudinaux étant opposés l'un à l'autre et s'étendent latéralement le long desdits conducteurs de phase électrique, lesdits premier et deuxième membres de blindage étant installés de manière à faire chaque fois un angle compris entre 45° et 135°, en particulier entre 65° et 115°, par rapport audit plan des conducteurs (cp) et à former un conducteur électrique continu le long desdits conducteurs de phase électrique, **caractérisé en ce que** lesdits premier et deuxième membres de blindage sont installés indépendamment l'un de l'autre et sont ensuite pontés (5, 6, 7) au moins au niveau de leur partie initiale et au niveau de leur partie terminale afin de former un circuit électrique fermé entre le premier et le deuxième membre de blindage, ledit premier et ledit deuxième membre de blindage étant pontés de telle manière que lesdits conducteurs de phase restent accessibles afin de permettre une détection de défaut de gaine sans avoir à enlever le blindage.

2. Procédé selon la revendication 1, **caractérisé en ce qu'**au moins un troisième membre de blindage (11) en forme de plaque est installé entre ledit premier et ledit deuxième membre de blindage, ledit troisième membre de blindage étant installé de manière à s'étendre dans un plan géométrique croisant ledit premier et ledit deuxième membre de blindage et situé entre ledit premier et ledit deuxième membre de blindage.

3. Procédé selon la revendication 2, **caractérisé en ce que** ledit plan géométrique s'étend à l'intérieur d'un volume délimité par ledit premier et ledit deuxième membre de blindage.

4. Procédé selon la revendication 2 ou 3, **caractérisé en ce que** ledit au moins un troisième membre de blindage est installé de manière à ne pas avoir besoin d'une connexion galvanique entre ledit au moins un troisième membre de blindage et ledit premier et ledit deuxième membre de blindage.

5. Procédé selon l'une quelconque des revendications 1 à 4, **caractérisé en ce que** ledit premier et ledit deuxième membre de blindage sont installés dans une direction sensiblement verticale.

6. Procédé selon la revendication 5 en combinaison avec l'une quelconque des revendications 2 à 4, **caractérisé en ce que** ledit au moins un troisième membre de blindage est installé de manière à s'étendre dans une direction sensiblement horizontale.

7. Procédé selon l'une quelconque des revendications 2 à 6, **caractérisé en ce que** ledit au moins un troisième membre de blindage est installé de manière discontinue le long desdits conducteurs de phase électrique.

8. Procédé selon l'une quelconque des revendications 1 à 7, **caractérisé en ce que** ledit pontage est réalisé au moyen d'une première et d'une deuxième plaque en forme de L, ladite première plaque en forme de L étant connectée audit premier membre de blindage et ladite deuxième plaque en forme de L étant connectée audit deuxième membre de blindage, lesdites plaques en forme de L étant en outre connectées l'une à l'autre.

9. Procédé selon l'une quelconque des revendications 1 à 8, **caractérisé en ce que** ledit premier, ledit deuxième et ledit troisième membre de blindage sont installés de manière à former une forme de H.

10. Procédé selon l'une quelconque des revendications 1 à 9, **caractérisé en ce que** lesdits membres de blindage sont réalisés en aluminium ou en cuivre.
